# EUROPEAN PATENT APPLICATION

(11) **EP 1 426 434 A2**
(43) Date of publication of application: **09.06.2004**
(21) Application number: 03257254.7
(22) Date of filing: 18.11.2003
(51) Int. Cl.: C10L 1/00, C10L 1/22, C10M 141/06, C10M 171/00

(54) **Method for marking liquid hydrocarbons**

(30) Priority: 03.12.2002 US 430614 P
(71) Applicant: ROHM AND HAAS COMPANY, Philadelphia, Pennsylvania 19106-2399 (US)
(72) Inventor: Baxter, David Roderick, Mirfield, West Yorkshire WF14 0EX (GB); Cranmer, Peter John, Mirfield, West Yorkshire WF14 8PZ (GB); Ho, Kim Sang, Richboro, Pennsylvania 18954 (US)
(74) Representative: Kent, Venetia Katherine

(57) **Abstract**

A method for marking a liquid petroleum hydrocarbon. The method comprises adding to the liquid petroleum hydrocarbon: (i) at least one anthraquinone dye having an absorption maximum in the range from 710 nm to 850 nm selected from the group consisting of 1,4,5,8-tetrasubstituted anthraquinones and anthraquinone dimers; and (ii) at least one visible dye having an absorption maximum in the range from 500 nm to 700 nm.

## Description

### Background

This invention relates generally to a method for marking petroleum hydrocarbons with combinations of marker compounds for subsequent identification.

U.S. Pat. No. 6,274,381 discloses a method for marking a petroleum hydrocarbon with at least two dyes having absorption maxima between 500 nm and 700 nm, thus allowing for creation of multiple absorption patterns which can be used to identify the hydrocarbon. This reference, however, does not suggest a method for marking petroleum hydrocarbons with dyes absorbing in other wavelength ranges.

Visible dyes having absorption maxima between 500 nm and 700 nm suffer from disadvantages as markers, including interference from other colored substances in the petroleum hydrocarbon, especially when the dyes are present at low levels. The problem addressed by this invention is to find an improved method for marking petroleum hydrocarbons with multiple markers.

### Statement of Invention

The present invention is directed to a method for marking a liquid petroleum hydrocarbon. The method comprises adding to the liquid petroleum hydrocarbon: (i) at least one anthraquinone dye having an absorption maximum in the range from 710 nm to 850 nm selected from the group consisting of 1,4,5,8-tetrasubstituted anthraquinones and anthraquinone dimers; and (ii) at least one visible dye having an absorption maximum in the range from 500 nm to 700 nm.

### Detailed Description

All percentages are weight percentages, unless otherwise indicated. Concentrations in parts per million ("ppm") are calculated on a weight/volume basis. The term "petroleum hydrocarbons" refers to products having a predominantly hydrocarbon composition that are derived from petroleum, preferably lubricating oil, hydraulic fluid, brake fluid, gasoline, diesel fuel, kerosene, jet fuel and heating oil. An "alkyl" group is a hydrocarbyl group having from one to twenty carbon atoms in a linear, branched or cyclic arrangement. Alkyl groups optionally have one or more double or triple bonds. Substitution on alkyl groups of one or more halo, hydroxy or alkoxy groups is permitted; alkoxy groups may in turn be substituted by one or more halo substituents. Preferably, alkyl groups have no halo or alkoxy substituents. A "heteroalkyl" group is an alkyl group having at least one carbon which has been replaced by O, NR, or S, wherein R is hydrogen, alkyl, aryl or aralkyl. An "aryl" group is a substituent derived from an aromatic hydrocarbon compound. An aryl group has a total of from six to twenty ring atoms, and has one or more rings which are separate or fused. An "aralkyl" group is an "alkyl" group substituted by an "aryl" group. A "heterocyclic" group is a substituent derived from a heterocyclic compound having from five to twenty ring atoms, at least one of which is nitrogen, oxygen or sulfur. Preferably, heterocyclic groups do not contain sulfur. Substitution on aryl or heterocyclic groups of one or more halo, cyano, nitro, alkoxycarbonyl, dialkylamino, alkylamino, amino, hydroxy, alkyl, heteroalkyl, alkanoyl or alkoxy groups is permitted, with substitution by one or more halo groups being possible on alkyl, heteroalkyl, alkanoyl or alkoxy groups. Preferably, aryl and heterocyclic groups do not contain halogen atoms. An "aromatic heterocyclic" group is a heterocyclic group derived from an aromatic heterocyclic compound.

In a preferred embodiment of the invention, a 1,4,5,8-tetrasubstituted anthraquinone dye having formula (I) is added to a petroleum hydrocarbon. 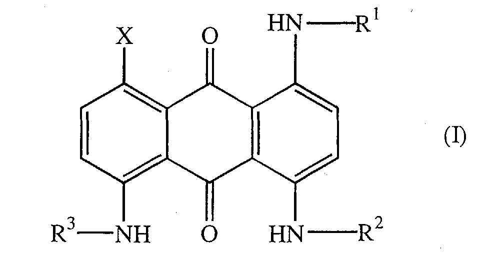 In formula (I), X is R⁴NH, NH₂, OH or halo; and R¹, R², R³ and R⁴ independently are alkyl, aryl, aralkyl, heteroalkyl or heterocyclic. Preferably, at least two of R¹, R², and R³ are aryl or aromatic heterocyclic. More preferably, X is R⁴NH, and at least three of R¹, R², R³ and R⁴ are aryl or aromatic heterocyclic, more preferably all four. Most preferably, all of R¹, R², R³ and R⁴ are aryl.

In another preferred embodiment of the invention, an anthraquinone dye which is an anthraquinone dimer is added to a petroleum hydrocarbon. Anthraquinone dimers include: (i) substituted derivatives, having λₘₐₓ from 710 to 850 nm, of 6,15-dihydro-5,9,14,18-anthrazinetetrone, shown below, 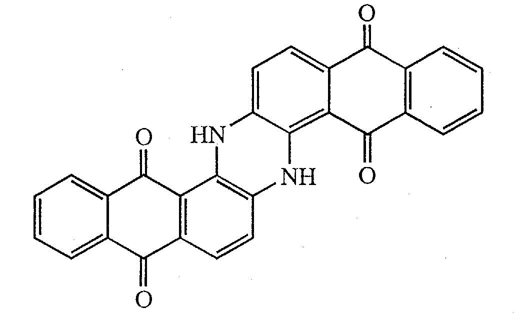 also known by the trade name INDANTHRENE; and (ii) other fused dimers of anthraquinones having extended conjugation throughout their ring systems and having λₘₐₓ from 710 to 850 nm. Preferably, the anthraquinone dimer is a substituted 6,15-dihydro-5,9,14,18-anthrazinetetrone of formula (II). 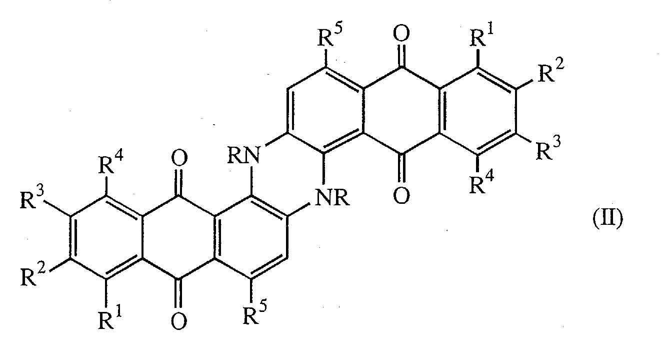 In formula (II), R¹, R², R³, and R⁴ independently are hydrogen, alkyl, heteroalkyl or alkylamino; R⁵ is hydrogen, alkyl, heteroalkyl, alkylamino, arylamino or aromatic-heterocyclic-amino; and R is hydrogen, alkyl, arylamino or aromatic-heterocyclic-amino; provided that one of Rand R⁵ is arylamino or aromatic-heterocyclic-amino. Preferably, R¹, R², R³, and R⁴ are hydrogen.

In one preferred embodiment, R¹, R², R³, R⁴ and R⁵ are hydrogen and R is arylamino. Preferably, R is a hydrogen-bond donor arylamino group, e.g., phenylamino. Most preferably, R is phenylamino, such that the compound is of formula (III). 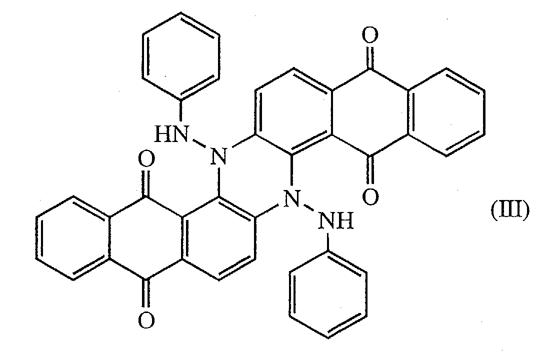 This compound has a λₘₐₓ of 790 nm.

In another preferred embodiment, R, R¹, R², R³, and R⁴ are hydrogen; and R⁵ is phenylamino, such that the compound is of formula (IV). 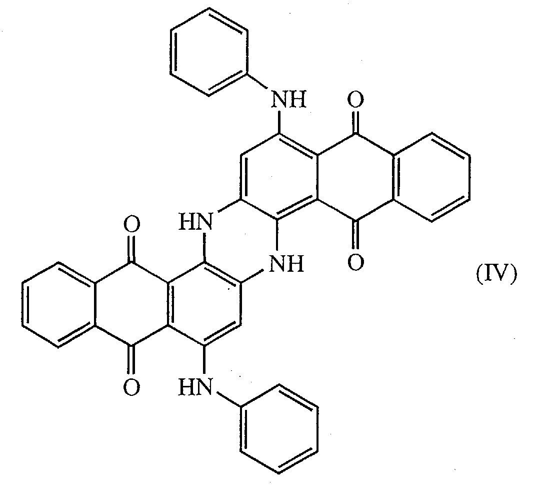 This compound is 6,15-dihydro-8,17-bis(phenylamino)-5,9,14,18-anthrazinetetrone, and has been sold commercially under the trade names C.I. VAT GREEN 6 and CALEDON GREEN RC.

Preferably the amount of each anthraquinone dye having an absorption maximum in the range from 710 nm to 850 nm which is added to the petroleum hydrocarbon is at least 0.01 ppm, more preferably at least 0.02 ppm, and most preferably at least 0.03 ppm. Preferably the amount of each dye is less than 10 ppm, more preferably less than 2 ppm, and most preferably less than 1 ppm. Preferably, the marking is invisible, i.e., the dye cannot be detected by simple visual observation of the marked hydrocarbon. Preferably, an anthraquinone dye having an absorption maximum in the range from 710 nm to 850 nm used in the method of this invention has an absorption maximum in the range from 720 nm to 850 nm, more preferably from 720 nm to 810 nm, and most preferably from 730 nm to 800 nm. In one embodiment, at least two anthraquinone dyes having absorption maxima at differential wavelengths within one of the aforementioned ranges are added to the petroleum hydrocarbon. Preferably, the anthraquinone dyes and the visible dyes are detected by exposing the marked hydrocarbon to electromagnetic radiation having wavelengths in the portion of the spectrum containing the absorption maxima of the dyes and detecting the absorption of light or fluorescent emissions. It is preferred that the detection equipment is capable of calculating dye concentrations and concentration ratios in a marked hydrocarbon. Typical spectrophotometers known in the art are capable of detecting the anthraquinone dyes used in the method of this invention which absorb in the 710 nm to 850 nm range when they are present at a level of at least 0.01 ppm. It is preferred to use the detectors described in U.S. Pat. No. 5,225,679, especially the SpecTrace™ analyzer available from Rohm and Haas Company, Philadelphia, PA. These analyzers use a filter selected based on the absorption spectrum of the dye, and use chemometric analysis of the signal by multiple linear regression methods to reduce the signal-to-noise ratio.

When the detection method does not involve performing any chemical manipulation of the marked hydrocarbon, the sample may be returned to its source after testing, eliminating the need for handling and disposal of hazardous chemicals. This is the case, for example, when the dyes are detected simply by measuring light absorption by a sample of the marked hydrocarbon.

In one embodiment of the invention, the dye is formulated in a solvent to facilitate its addition to the liquid hydrocarbon. The preferred solvents for tetra-substituted anthraquinones are N-methylpyrrolidinone, N,N-dimethyl propylene urea, nitrobenzene, toluene and N,N-dimethylformamide. Preferably, the dye is present in the solvent at a concentration of from 0.1% to 10%.

Preferably, each visible dye; i.e., a dye having an absorption maximum in the range from 500 nm to 700 nm, preferably from 550 nm to 700 nm, and most preferably from 550 nm to 680 nm; is added in an amount of at least 0.1 ppm, preferably at least 0.2 ppm, and most preferably at least 0.5 ppm. Preferably, the amount of each visible dye is no more than 10 ppm, more preferably no more than 5 ppm, more preferably no more than 3 ppm, and most preferably no more than 2 ppm. In a preferred embodiment, the visible dyes are selected from the classes of anthraquinone dyes and azo dyes. Suitable anthraquinone dyes having an absorption maximum in this region include, for example, 1,4-disubstituted anthraquinones having alkylamino, arylamino or aromatic-heterocyclic-amino substituents. Suitable azo dyes having an absorption maximum in this region include the bisazo dyes, for example, those having the structure Ar-N=N-Ar-N=N-Ar, in which Ar is an aryl group, and each Ar may be different. Specific examples of suitable commercial anthraquinone and bisazo dyes having an absorption maximum in this region are listed in the Colour Index, including C.I. Solvent Blue 98, C.I. Solvent Blue 79, C.I. Solvent Blue 99 and C.I. Solvent Blue 100.

Incorporation of at least one anthraquinone dye having an absorption maximum in the region from 710 nm to 850 nm allows identification of the liquid hydrocarbon by spectrophotometric means in a spectral region relatively free of interference. Low levels of these dyes are detectable in this region, allowing for a cost-effective marking process. Use of higher levels of at least one visible dye having an absorption maximum in the region from 500 nm to 700 nm facilitates quantitative spectrophotometric determination in this region. Accurate determination of the dye levels allows the amounts and ratios of the dyes to serve as parts of a code identifying the hydrocarbon. Since dyes absorbing in this region often are less costly, use of a higher level will not greatly increase the overall cost of the marking process. Thus, the combination of the two kinds of dyes increases the flexibility and minimizes the cost of the marking process. Preferably, there is no visible change in the color of the marked liquid hydrocarbon, i.e., the markers are "silent markers."

### Examples

### Example 1: Synthesis of 1,4,5,8-tetra(phenylamino)anthraquinone

A mixture of 10.87 g of 1,4,5,8-tetrachloroanthraquinone , 50 g of aniline, 13.4 g of potassium acetate, 1.24 g of copper sulfate, and 3.41 g of benzyl alcohol was heated to 130 °C under nitrogen and maintained at this temperature for 6.5 hours, followed by another holding period at 170 °C for 6 hours. The reaction mixture was cooled to ambient temperature and the precipitate was filtered to give black solids. Recrystallization of the crude product from toluene afforded 6.0 g of a dark green crystalline material (> 95% purity with the structure confirmed by proton NMR as the desired product: 1,4,5,8-tetra(phenylamino)anthraquinone. This material had a maximum absorption band (λₘₐₓ) at a wavelength of 750 nm in toluene. The molar extinction coefficient (ε) was determined to be ∼30,500.

### Example 2: Synthesis of 1,4,5,8-tetra(4-n-butylphenylamino)anthraquinone

A mixture of 10.87 g of 1,4,5,8-tetrachloroanthraquinone and 95 g of 4-n-butylaniline was allowed to react at 190 °C for 12 hours. The reaction mixture was then cooled to 70 °C and diluted with an equal amount of ethanol. On standing and further cooling to ambient temperature, some precipitate was formed. The mixture was filtered, washed and recrystallized from xylenes/isopropanol to give 6.6 g of a dark green crystalline material (>95% purity) with the structure confirmed by proton NMR as the desired product of 1,4,5,8-tetra(4-n-butylphenylamino)anthraquinone. This material had a maximum absorption band (λₘₐₓ) at a wavelength of 762 nm in toluene. The molar extinction coefficient (ε) was determined to be ∼36,900.

### Example 3: Detection of Tetra-Substituted Anthraquinone Dyes in Petroleum Hydrocarbons

Solutions of 1,4,5,8-tetra(phenylamino)anthraquinone (TPAAQ) in xylenes, Texaco™ diesel fuel and Mobil™ regular gasoline at varying concentrations were prepared and analyzed with a laboratory spectrophotometer. The results are presented in the Table below, with expected and actual readings expressed as a percentage of the reading for 1 mg/mL.

**Table**

| concentration, mg/mL | expected reading | actual reading |
|---|---|---|
| TPAAQ in xylenes | | |
| 2.045 | 204 | 208 |
| 1.063 | 106 | 105 |
| 0.983 | 98 | 98 |
| 0.703 | 70 | 71 |
| 0.402 | 40 | 40 |
| 0.073 | 7 | 8 |
| 0.035 | 4 | 3 |

| TPAAQ in Texaco™ diesel fuel | | |
|---|---|---|
| 1.35 | 135 | 135 |
| 1.09 | 109 | 109 |
| 0.84 | 84 | 85 |
| 0.58 | 58 | 56 |
| 0.33 | 33 | 33 |
| 0.05 | 5 | 4 |

| TPAAQ in Mobil™ regular gasoline | | |
|---|---|---|
| 1.335 | 133 | 134 |
| 0.934 | 93 | 92 |
| 0.565 | 56 | 57 |
| 0.389 | 39 | 38 |
| 0.059 | 6 | 5 |
| 0.048 | 5 | 5 |

## Claims

1. A method for marking a liquid petroleum hydrocarbon; said method comprising adding to said liquid petroleum hydrocarbon: (i) at least one anthraquinone dye having an absorption maximum in the range from 710 nm to 850 nm selected from the group consisting of 1,4,5,8-tetrasubstituted anthraquinones and anthraquinone dimers; and (ii) at least one visible dye having an absorption maximum in the range from 500 nm to 700 nm.

2. The method of claim 1 in which the liquid petroleum hydrocarbon is selected from the group consisting of lubricating oil, hydraulic fluid, brake fluid, gasoline, diesel fuel, kerosene, jet fuel and heating oil.

3. The method of claim 2 in which said at least one anthraquinone dye having an absorption maximum in the range from 710 nm to 850 nm has formula (I) 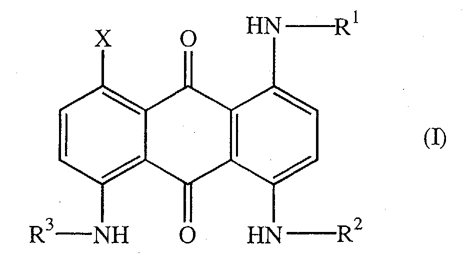 wherein X is R⁴NH, NH₂, OH or halo; and R¹, R², R³ and R⁴ independently are alkyl, aryl, aralkyl, heteroalkyl or heterocyclic.

4. The method of claim 3 in which X is R⁴NH, and at least three of R¹, R², R³ and R⁴ are aryl or aromatic heterocyclic.

5. The method of claim 2 in which said at least one anthraquinone dye having an absorption maximum in the range from 710 nm to 850 nm has formula (II) 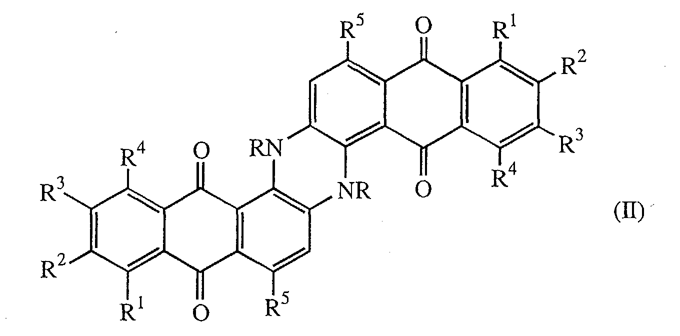 wherein R¹, R², R³, and R⁴ independently are hydrogen, alkyl, heteroalkyl or alkylamino; R⁵ is hydrogen, alkyl, heteroalkyl, alkylamino, arylamino or aromatic-heterocyclic-amino; and R is hydrogen, alkyl, arylamino or aromatic-heterocyclic-amino; provided that at least one of Rand R⁵ is arylamino or aromatic-heterocyclic-amino.

6. The method of claim 2 in which said at least one visible dye having an absorption maximum in the range from 500 nm to 700 nm is selected from the group consisting of anthraquinone dyes and diazo dyes.

7. The method of claim 6 in which said at least one visible dye has an absorption maximum in the range from 550 nm to 700 nm.

8. The method of claim 1 in which said at least one anthraquinone dye having an absorption maximum in the range from 710 nm to 850 nm, and said at least one visible dye having an absorption maximum in the range from 500 nm to 700 nm are detected without performing any chemical manipulation of the liquid petroleum hydrocarbon.

9. The method of claim 8 in which said at least one anthraquinone dye having an absorption maximum in the range from 710 nm to 850 nm is present in an amount from 0.02 ppm to 1 ppm and said at least one visible dye having an absorption maximum in the range from 500 nm to 700 nm is present in an amount from 0.2 ppm to 2 ppm.

10. The method of claim 9 in which said at least one anthraquinone dye has an absorption maximum in the range from 720 nm to 810 nm.
